# EUROPÄISCHE PATENTSCHRIFT

(11) **EP 3 927 499 B1**
(45) Veröffentlichungstag und Bekanntmachung des Hinweises auf die Patenterteilung: **27.12.2023**
(21) Anmeldenummer: 20706655.6
(22) Anmeldetag: 14.02.2020
(51) Int. Cl.: B25J 9/16, G05B 19/404

(54) **ANORDNUNG UND VERFAHREN ZUM ZENTRIERTEN POSITIONIEREN EINES WERKSTÜCKS IN EINEM SPANNFUTTER**
ASSEMBLY AND METHOD FOR CENTERING A WORKPIECE IN A CHUCK
DISPOSITIF ET PROCÉDÉ POUR LE POSITIONNEMENT CENTRÉ D'UNE PIÈCE À USINER DANS UN MANDRIN DE SERRAGE

(30) Priorität: 21.02.2019 DE 102019104420
(43) Veröffentlichungstag der Anmeldung: 29.12.2021
(73) Patentinhaber: Walter Maschinenbau GmbH, 72072 Tübingen (DE)
(72) Erfinder: BODMER, Andreas, 72469 Meßstetten (DE); BOSCH, Tobias, 72145 Hirrlingen (DE)
(74) Vertreter: Rüger Abel Patentanwälte PartGmbB
(86) Internationale Anmeldenummer: PCT/EP2020/053952
(87) Internationale Veröffentlichungsnummer: WO 2020/169481

(56) Entgegenhaltungen:
- WO-A1-2004/052592
- DE-A1- 19 641 494
- DE-A1-102017 109 360
- FANUC AG: "FANUC for Nelissen - Shortage of staff makes Nelissen get hold of robots", Yellow Success Stories - Robot - Metal, 14. März 2018 (2018-03-14), Seiten 1-5, XP055693288, Gefunden im Internet: URL:https://www.fanuc.eu/uk/en/customer-ca ses/automatic-loading-and-unloading [gefunden am 2020-05-08]
- Jörg Eiberger: "Drehbank einstellen & ausrichten leicht gemacht!", Online BLOG: Die Drehbank - Hobby. Beruf. Leidenschaft, 28. Oktober 2016 (2016-10-28), Seiten 1-6, XP055693229, Gefunden im Internet: URL:https://drehbank.co/blog/drehbank-eins tellen-ausrichten/ [gefunden am 2020-05-08]
- Hans B Kief ET AL: "Elektronische Werkzeug-Identifikation / Prozessnahe Fertigungsmesstechnik" In: "CNC-Handbuch 2013/2014", 1. Januar 2013 (2013-01-01), Carl Hanser Verlag, München, XP055693241, Seiten 418-440, Seite 430 - Seite 440
- FANUC AG: "Automatic machine tool loading and unloading", FANUC > Customer cases, 14. März 2018 (2018-03-14), Seiten 1-5, XP055693126, Gefunden im Internet: URL:http://web.archive.org/web/20180314052 935/https://www.fanuc.eu/uk/en/customer-ca ses/automatic-loading-and-unloading [gefunden am 2020-05-08]

## Beschreibung

Die Erfindung betrifft eine Anordnung aufweisend eine Werkzeugmaschine mit einem um eine Spannfutterachse drehbaren Spannfutter, eine Messvorrichtung mit zwei Sensoreinheiten, einen Roboterarm mit einer Greifeinrichtung und eine Steuereinrichtung. Die Anordnung ist dazu eingerichtet, ein Verfahren auszuführen, um den Roboterarm mit der Greifeinrichtung gegenüber einem Koordinatensystem der Werkzeugmaschine zu justieren. Die Erfindung betrifft auch ein Verfahren zur Justage des Roboterarms mit der Greifeinrichtung gegenüber dem Koordinatensystem der Werkzeugmaschine.

Roboter mit einer Greifeinrichtung zur Ausführung eines automatischen Werkstückwechsels an Werkzeugmaschinen sind bekannt. Problematisch bei herkömmlichen Roboterarmen kann deren genaue Positionierung gegenüber dem Spannfutter der Werkzeugmaschine sein, um einen automatischen Werkstückwechsel auszuführen. Abhängig von der Ausgestaltung des Spannfutters und der Größe des Werkstücks verbleibt oft nur wenig Spielraum, um das kollisionsfreie Einsetzen des Werkstücks im Spannfutter durchzuführen. Die Position einer Greifeinrichtung am freien Ende des Roboterarms hängt beispielsweise von der der Streckung des Roboterarms ab. Zwischen den einzelnen gelenkig bzw. schwenkbar miteinander verbundenen Armabschnitten des Roboterarms treten abhängig vom Knickwinkel bzw. der Strecklage zwischen zwei Armabschnitten unterschiedliche Belastungen auf, aufgrund von Elastizitäten und erreichbaren Positioniergenauigkeiten an der Gelenkverbindung. Wird der Roboterarm in einer Position gegenüber dem Koordinatensystem der Werkzeugmaschine justiert, kann nicht sichergestellt werden, dass die Greifeinrichtung auch in anderen Positionen innerhalb des Arbeitsbereichs der Werkzeugmaschine mit ausreichender Genauigkeit durch den Roboterarm positioniert werden kann.

Aus der Veröffentlichung "FANUC for Nelissen - Shortage of staff makes Nelissen get hold of robots", Yellow Success Stories - Robot - Metal, 14. März 2018, Seiten 1-5, XP055693288, ist ein Roboterarm bekannt, der mit einer Dreh- oder Fräsmaschine mit zwei Spannfuttern zusammenarbeitet. Dadurch soll ein automatischer Werkstückwechsel ausgeführt werden können.

DE 10 2017 109 360 A1 offenbart einen maschineninternen Roboter, der in der Nähe des Werkstücks angeordnet ist. Der Roboter hat einen Endeffektor, an dem unterschiedliche Einrichtungen vorhanden sein können, beispielsweise ein Sensor, ein Haltemechanismus oder eine Einrichtung zur Abgabe eines Fluids.

In dem Artikel von Jörg Eiberger: "Drehbank einstellen & ausrichten leicht gemacht!", Online BLOG: Die Drehbank - Hobby. Beruf. Leidenschaft, 28. Oktober 2016, Seiten 1-6, XP055693229, wird das Einrichten und Ausrichten einer Drehbank erklärt.

Hans B Kief ET AL: "Elektronische Werkzeug-Identifikation / Prozessnahe Fertigungsmesstechnik" in: "CNC-Handbuch 2013/2014", 2013, Carl Hanser Verlag, München, XP055693241, Seiten 418-440 beschreibt ein RFID-System zur Werkzeug-Identifikation.

WO 2004/052592 A1 offenbart ein Verfahren, um ein Werkstück zentriert einzuspannen. Dazu weist die Spannfuttereinrichtung wenigstens drei separate Einheiten zum Spannen und Justieren des Werkstücks auf. Das eingespannte Werkstück kann über Sensoren an unterschiedlichen Axialpositionen angetastet werden, um Abweichungen im Rundlauf zu erkennen.

DE 196 41 494 A1 betrifft eine Maschine zur spanenden Bearbeitung von Werkstücken, beispielsweise eine Fräsmaschine. Ein Drehantrieb dient zum Antreiben eines Fräskopfes. Ein Unwuchtsensor erfasst dabei auftretende Unwuchtkräfte und übermittelt entsprechende Messwerte an einen Kompensationsrechner. Der Vorschub kann abhängig von der erfassten Unwucht korrigiert werden.

Es kann daher als Aufgabe der vorliegenden Erfindung angesehen werden, die Genauigkeit der Positionierung der Greifeinrichtung beim Einsetzen oder Entnehmen von Werkstücken in das Spannfutter einer Werkzeugmaschine zu verbessern.

Diese Aufgabe wird durch eine Anordnung mit den Merkmalen des Patentanspruches 1 sowie ein Verfahren mit den Merkmalen des Patentanspruches 11 gelöst.

Die erfindungsgemäße Anordnung weist eine Werkzeugmaschine mit einem um eine Spannfutterachse drehbaren Spannfutter, eine Messvorrichtung mit zwei Sensoreinheiten, einen Roboterarm mit einer oder mehreren Greifeinrichtungen und eine Steuereinrichtung auf. Die Steuereinrichtung kann Bestandteil der Steuerung des Roboterarms und/oder der Werkzeugmaschine sein. Der Roboterarm und die Werkzeugmaschine können über eine gemeinsame oder getrennte Steuereinrichtung gesteuert werden. Die Sensoreinheiten der Messvorrichtung sind mit der Steuereinrichtung kommunikationsverbunden, wobei die Kommunikationsverbindung drahtlos oder drahtgebunden sein kann.

Die Messvorrichtung ist dazu eingerichtet, am Spannfutter derart angebracht zu werden, dass sich die Messvorrichtung mit den Sensoreinheiten gemeinsam mit dem Spannfutter um die Spannfutterachse drehen kann. Auf diese Weise kann das Spannfutter mit der Messvorrichtung in unterschiedliche Drehstellungen um die Spannfutterachse bewegt werden. In angebrachtem Zustand sind die Sensoreinheiten der Messvorrichtung unterschiedlichen Messstellen entlang der Spannfutterachse des Spannfutters zugeordnet. Die Messstellen sind in Erstreckungsrichtung der Spannfutterachse mit Abstand voneinander angeordnet. Jede Sensoreinheit misst an der einen, zugeordneten Messstelle und ist dazu eingerichtet, einen Abstand einer Werkstückaußenfläche an der jeweiligen Messstelle von der Spannfutterachse zu messen und ein Messsignal, das diesen Abstand beschreibt, an die Steuereinrichtung zu übermitteln. Somit kann an jeder Messstelle die Position einer Werkstückoberfläche radial zur Spannfutterachse bestimmt werden.

Um die Greifeinrichtung gegenüber der Spannfutterachse zu justieren, ist die Steuereinrichtung der Anordnung dazu eingerichtet, die nachfolgend beschriebenen Schritte automatisch auszuführen, wobei manuelle Bedienungen einer Bedienperson nicht erforderlich sind.

In einem Schritt a) wird die Greifeinrichtung zur Aufnahme eines Werkstücks angesteuert. Weist der Roboterarm an seinem freien Ende mehrere und insbesondere zwei Greifeinrichtungen auf, wird von jeder Greifeinrichtung ein Werkstück aufgenommen.

Wenn der Roboterarm mehrere Greifeinrichtungen aufweist, wird bei den nachfolgenden Schritten diejenige Greifeinrichtung verwendet, die zum Einsetzen eines Werkstücks in das Spannfutter vorgesehen und eingerichtet ist. Alternativ können die nachfolgenden Schritte auch für sämtliche Greifeinrichtungen durchgeführt werden.

In einem Schritt b) wird die Greifeinrichtung angesteuert, um das Werkstück im Bereich der Messstellen der Sensoreinheiten neben dem Spannfutter zu positionieren. In dieser Position erzeugt jede Sensoreinheit einen Messwert bzw. ein Messsignal, das den Abstand der an der Messstelle vorhandenen Werkstückaußenfläche von der Spannfutterachse angibt.

In einem Schritt c) wird der Roboterarm mit der Greifeinrichtung zum Positionieren des Werkstücks auf Basis der Messsignale der Sensoreinheiten angesteuert. Das Positionieren des Werkstücks erfolgt dabei derart, dass die Abweichung zwischen einer Werkstückachse des Werkstücks und der Spannfutterachse innerhalb eines vorgegebenen Toleranzbereichs liegt. Das Werkstück kann beispielsweise ein zumindest abschnittsweise zylindrisches Werkstück sein, wobei die Werkstückachse die Längsachse des wenigstens einen zylindrischen Abschnitts darstellt. Die Position des Werkstücks ist durch den Abstand der Werkstückachse von der Spannfutterachse und die Neigung der Werkstückachse gegenüber der Spannfutterachse bestimmt. Ziel ist es, das Werkstück derart relativ zur Spannfutterachse zu positionieren, dass die Werkstückachse möglichst mit der Spannfutterachse übereinstimmt, dass sich also die Werkstückachse entlang der Spannfutterachse erstreckt.

In diesem Schritt c) befindet sich das Spannfutter mit der Messvorrichtung in einer ersten Drehstellung um die Spannfutterachse. Die erste Drehstellung kann entweder durch Ansteuern des Spannfutters bzw. der Werkzeugmaschine nach dem Anordnen der Messvorrichtung am Spannfutter eingestellt werden oder die Messvorrichtung kann in der ersten Drehstellung am Spannfutter angebracht werden, so dass ein anschließendes Drehen des Spannfutters um die Spannfutterachse entfallen kann.

Nachdem das Werkstück in Schritt c) in der ersten Drehstellung positioniert wurde, steuert die Steuereinrichtung die Werkzeugmaschine bzw. das Spannfutter an, um eine Drehung des Spannfutters in eine zweite Drehstellung um die Spannfutterachse zu veranlassen (Schritt d)). Die zweite Drehstellung weicht von der ersten Drehstellung ab. Vorzugsweise erfolgt zwischen der ersten Drehstellung und der zweiten Drehstellung eine Drehung des Spannfutters um 90°. Bei einem Ausführungsbeispiel messen die Sensoreinheiten in der ersten Drehstellung in einer ersten Ebene, die radial zur Spannfutterachse ausgerichtet ist, und in der zweiten Drehstellung in einer zweiten Ebene, die radial zur Spannfutterachse ausgerichtet ist. Die erste Ebene kann eine horizontale Ebene sein und die zweite Ebene kann eine vertikale Ebene sein oder umgekehrt.

In der zweiten Drehstellung prüft die Steuereinrichtung auf Basis der Messsignale zunächst die Position des Werkstücks dahingehend, ob die Abweichung zwischen der Werkstückachse und Spannfutterachse innerhalb eines vorgegebenen Toleranzbereichs liegt und falls nicht steuert die Steuereinrichtung den Roboterarm an, um das Werkstück auf Basis der Messsignale innerhalb des Toleranzbereichs relativ zur Spannfutterachse zu positionieren (Schritt e)). Das Positionieren in diesem Schritt e) erfolgt analog zum Positionieren im Schritt c). Das Werkstück wird auch im Schritt e) derart positioniert, dass die Abweichung zwischen der Werkstückachse und der Spannfutterachse innerhalb eines vorgegebenen Toleranzbereichs liegt. Die Toleranzbereiche können im Schritt c) und im Schritt e) vorzugsweise identisch sein.

Durch das Positionieren des Werkstücks in den beiden unterschiedlichen Drehstellungen des Spannfutters bzw. der Messvorrichtung wird eine wiederholbare Genauigkeit für das Positionieren eines Werkstücks mittels der Greifeinrichtung benachbart zum Spannfutter erreicht, so dass anschließend durch eine Relativbewegung zwischen dem Werkstück und dem Spannfutter entlang der Spannfutterachse ein kollisionsfreies Einsetzen des Werkstücks in das Spannfutter möglich ist. Dabei wird vorzugsweise nur das Spannfutter bewegt und das Werkstück bleibt in seiner Position in Bezug auf das ortsfeste Koordinatensystem der Werkzeugmaschine. Da das Justieren des Roboterarms bzw. der Greifeinrichtung in der Position erfolgt, in der beim Betrieb das Werkstück eingesetzt wird, werden Positionierungenauigkeiten des Roboterarms berücksichtigt. Der Roboterarm wird gegenüber dem Koordinatensystem der Werkzeugmaschine unmittelbar benachbart zum Spannfutter gegenüber der Spannfutterachse mit einer hohen Genauigkeit justiert, so dass eine wiederholbare Positioniergenauigkeit des Werkstücks gegenüber der Spannfutterachse erreicht und Kollisionen beim Einsetzen eines Werkstücks in das Spannfutter vermieden werden können, auch wenn zwischen dem Werkstück und dem Spannfutter lediglich ein geringes Spiel verbleibt, das für das Einsetzen zur Verfügung steht.

Beim Entnehmen eines bearbeiteten Werkstücks aus dem Spannfutter kann es bei fehlerhafter Positionierung der Greifeinrichtung zu einem Verklemmen des Werkstücks im Spannfutter kommen. In eingespannter Lage ist das bearbeitete Werkstück exakt entlang der Spannfutterachse ausgerichtet und der Roboterarm kann das bearbeitete Werkstück mit der Greifeinrichtung aufnehmen. Anschließend kann das bearbeitete Werkstück durch eine Relativbewegung zwischen der Greifeinrichtung und dem Spannfutter, vorzugsweise nur durch eine Bewegung des Spannfutters, entlang der Spannfutterachse aus dem Spannfutter entnommen werden.

Es ist vorteilhaft, wenn die Steuereinrichtung dazu eingerichtet ist, nach dem Schritt e) die folgenden Schritte auszuführen: Schritt f): Ansteuern der Werkzeugmaschine bzw. des Spannfutters, um das Spannfutter und die daran angeordnete Messvorrichtung aus der zweiten Drehstellung in die erste Drehstellung zu drehen und Schritt g): Prüfen der Position des Werkstücks auf Basis der Messsignale, ob die Abweichung zwischen der Werkstückachse und Spannfutterachse innerhalb des vorgegebenen Toleranzbereichs liegt und falls nicht Ansteuern des Roboterarms zum Positionieren des Werkstücks derart, dass die Abweichung zwischen der Werkstückachse und der Spannfutterachse innerhalb eines vorgegebenen Toleranzbereichs liegt wobei sich das Spannfutter und die daran angeordneten Messvorrichtung in der ersten Drehstellung um die Spannfutterachse befinden.

Anschließend können einer oder mehrere der Schritte d) bis g) wiederholt werden. Das Wiederholen eines oder mehrerer der Schritte d) bis g) wird so oft ausgeführt, bis in beiden Drehstellungen der vorgegebene Toleranzbereich eingehalten wird. Dieses Wiederholen kann deswegen erforderlich sein, weil durch das Positionieren des Werkstücks in der einen Drehstellung wiederum auch die Position des Werkstücks in der jeweils anderen Drehstellung beeinflusst wird. Es ist daher vorteilhaft, nach dem Schritt e) wieder die erste Drehstellung einzustellen und das Verfahren zumindest solange fortzusetzen, bis nach dem Drehen des Spannfutters in die erste Drehstellung oder die zweite Drehstellung eine Veränderung der Position des Werkstücks nicht mehr erforderlich ist.

Es ist außerdem vorteilhaft, wenn die Steuereinrichtung dazu eingerichtet ist, den Roboterarm beim Positionieren des Werkstücks in den Schritten c), e) und g) derart anzusteuern, dass zunächst die Werkstückachse innerhalb des vorgegebenen Toleranzbereichs parallel zur Spannfutterachse ausgerichtet wird und anschließend eine Bewegung des Werkstücks rechtwinklig zur Werkstückachse bzw. Spannfutterachse ausgeführt wird, bis der Abstand zwischen der Werkstückachse und der Spannfutterachse an beiden Messstellen innerhalb des Toleranzbereichs liegt. Dieser Abstand wird durch die jeweiligen Messsignale an den Messstellen charakterisiert. Mit anderen Worten wird das Werkstück in den Schritten c), e) und g) zunächst in seiner Neigung gegenüber der Spannfutterachse ausgerichtet und anschließend parallel zur Spannfutterachse bewegt und zentriert. Das Positionieren des Werkstücks in den Schritten c), e) und g) ist somit vorzugsweise zweistufig.

Es ist vorteilhaft, wenn die Steuereinrichtung dazu eingerichtet ist, den Roboterarm zum Positionieren des Werkstücks abhängig von einem Werkstückdurchmesser und/oder von einer Greifposition der Greifeinrichtung am Werkstück anzusteuern. Der Werkstückdurchmesser und/oder die Greifposition können der Steuereinrichtung unmittelbar, beispielsweise über eine Bedienschnittstelle der Werkzeugmaschine, oder indirekt durch einen oder mehrere andere Parameter vorgegeben werden. Der wenigstens ein Parameter kann manuell eingegeben oder automatisch erfasst werden. Die Greifposition beschreibt insbesondere den Abstand zwischen der Stelle, an der die Greifeinrichtung am Werkstück angreift und einem oder beiden freien Enden des Werkstücks.

Die Sensoreinheiten können als taktil arbeitende Sensoreinheiten ausgeführt sein und beispielsweise jeweils von einer Messuhr gebildet sein. Alternativ können auch berührungslos arbeitende Sensoreinheiten, z.B. optische und/oder elektromagnetische Abstandssensoren verwendet werden.

Das erfindungsgemäße Verfahren kann unter Verwendung eines Ausführungsbeispiels der vorstehenden Anordnung durchgeführt werden. Alternativ oder zusätzlich können eine oder mehrere Schritte auch durch alternative Mittel bzw. Einrichtungen ausgeführt werden. Das erfindungsgemäße Verfahren umfasst die folgenden Schritte:

Zunächst wird die Messvorrichtung am Spannfutter angebracht, so dass die Sensoreinheiten an den unterschiedlichen Messstellen entlang der Spannfutterachse messen können. Die Messvorrichtung wird derart am Spannfutter angebracht, dass sich die Messvorrichtung gemeinsam mit dem Spannfutter um die Spannfutterachse drehen kann. Das Anbringen der Messvorrichtung kann in der ersten Drehstellung des Spannfutters erfolgen oder das Spannfutter kann nach dem Anbringen der Messvorrichtung in die erste Drehstellung um die Spannfutterachse gedreht werden.

Mittels des Roboterarms bzw. dessen Greifeinrichtung wird ein Werkstück aufgenommen. Der Roboterarm wird derart bewegt, dass die Greifeinrichtung das aufgenommene Werkstück im Bereich der Messstellen der Sensoreinheiten benachbart zum Spannfutter derart positioniert, dass jede Sensoreinheit an der jeweiligen Messstelle einen Messwert aufnehmen kann. Dann wird das Werkstück durch Bewegen der Greifeinrichtung bzw. des Roboterarms abhängig von den Messsignalen der Sensoreinheiten positioniert. Beim Positionieren werden die Neigung der Werkstückachse gegenüber der Spannfutterachse und der Abstand der Werkstückachse von der Spannfutterachse derart eingestellt, dass ein vorgegebener Toleranzbereich eingehalten wird.

Anschließend wird das Spannfutter aus der ersten Drehstellung in die zweite Drehstellung bewegt, vorzugsweise um etwa 90°. In der zweiten Drehstellung wird die Position des Werkstücks geprüft, ob die Abweichung zwischen der Werkstückachse und Spannfutterachse innerhalb eines vorgegebenen Toleranzbereichs liegt und falls nicht wird analog zum Vorgehen in der ersten Drehstellung das Werkstück positioniert, so dass die Werkstückachse relativ zur Spannfutterachse innerhalb eines vorgegebenen Toleranzbereichs positioniert ist (Neigung und Abstand).

Das Prüfen und gegebenenfalls Positionieren des Werkstücks in der ersten Drehstellung und der zweiten Drehstellung kann wiederholt durchgeführt werden bis nach dem Drehen des Spannfutters aus der ersten Drehstellung in die zweite Drehstellung oder aus der zweiten Drehstellung in die erste Drehstellung festgestellt wird, dass keine Veränderung in der Position des Werkstücks mehr erforderlich ist, um den Toleranzbereich einzuhalten.

Vorteilhafte Ausgestaltungen der Erfindung ergeben sich aus den abhängigen Patentansprüchen, der Beschreibung und den Zeichnungen. Nachfolgend werden bevorzugte Ausführungsbeispiele der Erfindung anhand der beigefügten Zeichnungen im Einzelnen erläutert. Die Zeichnungen zeigen:
Figur 1 ein Blockschaltbild eines Ausführungsbeispiels einer Anordnung aufweisend eine Werkzeugmaschine, eine Messvorrichtung, einen Roboterarm und eine Steuereinrichtung,
Figur 2 die Darstellung des Spannfutters der Werkzeugmaschine aus Figur 1 mit der daran angeordneten Messvorrichtung,
Figur 3 das Justieren der Sensoreinheiten der Messvorrichtung aus Figur 2 mit Hilfe eines in das Spannfutter eingespannten Werkstücks,
Figuren 4 und 5 das Spannfutter mit der daran angeordneten Messvorrichtung in einer ersten Drehstellung,
Figuren 6-8 das Positionieren eines von einer Greifeinrichtung des Roboterarms aus Figur 1 gehaltenen Werkstücks benachbart zum Spannfutter relativ zu einer Spannfutterachse des Spannfutters und
Figuren 9 und 10 das Spannfutter mit der angeordneten Messvorrichtung in einer zweiten Drehstellung um die Spannfutterachse.

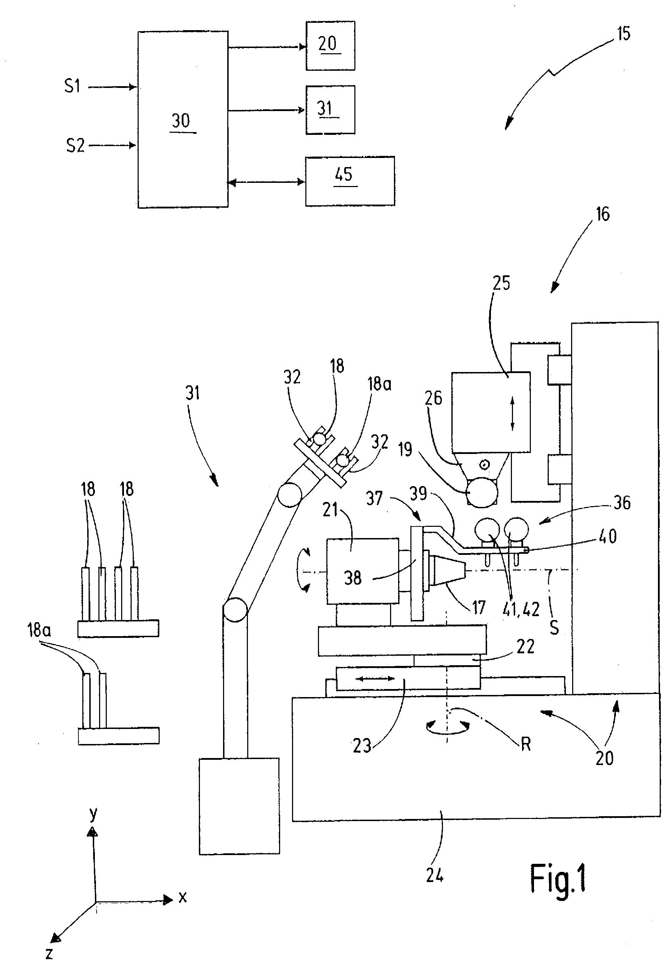

In Figur 1 ist stark schematisiert ein Blockschaltbild eines Ausführungsbeispiels einer Anordnung 15 veranschaulicht. Zu der Anordnung 15 gehört eine Werkzeugmaschine 16 mit einem um eine Spannfutterachse S drehbaren Spannfutter 17. Die Spannfutterachse S ist beispielsgemäß horizontal ausgerichtet, könnte aber auch eine vertikale oder eine andere beliebige Ausrichtung haben. Das Spannfutter 17 ist zum Einspannen eines zu bearbeitenden Werkstücks 18 eingerichtet. Bei dem Werkstück 18 handelt es sich insbesondere um ein stabförmiges Werkstück, das zumindest abschnittsweise zylindrisch sein kann. Für das nachfolgend beschriebene Verfahren wird als Werkstück 18 ein kreiszylindrisches Werkstück mit konstantem Durchmesser verwendet.

Die Werkzeugmaschine 16 hat ein Bearbeitungswerkzeug 19 zum Bearbeiten des Werkstücks 18. Beispielsgemäß handelt es sich bei der Werkzeugmaschine 16 um eine Schleifmaschine, eine Erodiermaschine, oder eine kombinierte Schleif- und Erodiermaschine. Das Bearbeitungswerkzeug 19 ist daher ein Schleifwerkzeug und/oder Erodierwerkzeug.

Mittels einer Maschinenachsanordnung 20 der Werkzeugmaschine 16 können das Bearbeitungswerkzeug 19 und das Spannfutter 17 relativ zueinander bewegt und positioniert werden. Die Anzahl der linearen Achsen und/oder Drehachsen der Maschinenachsanordnung 20 kann variieren. Eine erste Drehachse 21 dient zum drehenden Antreiben des Spannfutters 17 um die Spannfutterachse S. Eine zweite Drehachse 22 dient zum Schwenken bzw. Drehen des Spannfutters 17 um eine Rotationsachse R, die beispielsgemäß rechtwinklig zur Spannfutterachse S ausgerichtet ist. Außerdem sind bei der beispielhaften Werkzeugmaschine 16 eine erste Linearachse 23 zur Bewegung des Spannfutters 17 in eine x-Richtung relativ zu einem Maschinenbett 24 oder Maschinengestell, eine zweite Linearachse 25 zur Bewegung des Bearbeitungswerkzeugs 19 in eine γ-Richtung relativ zum Maschinenbett 24 oder Maschinengestell sowie eine dritte Linearachse 26 zur Bewegung des Bearbeitungswerkzeugs 19 in eine z-Richtung relativ zum Maschinenbett 24 oder Maschinengestell vorhanden. Die Anzahl und die Stapelung der Maschinenachsen der Maschinenachsanordnung 20 kann variieren und abhängig von der Werkzeugmaschine gewählt werden.

Die Maschinenachsanordnung 20 wird mittels einer Steuereinrichtung 30 angesteuert.

Zu der Anordnung 15 gehört ein Roboterarm 31, an dessen freiem Ende sich wenigstens eine Greifeinrichtung 32 befindet. Bei dem in Figur 1 dargestellten Ausführungsbeispiel hat der Roboterarm 31 zwei Greifeinrichtungen 32, so dass sowohl ein zu bearbeitendes Werkstück 18, als auch ein fertig bearbeitetes Werkstück 18a gleichzeitig aufgenommen werden kann. Der Roboterarm 31 ist beispielsweise dazu eingerichtet, ein noch zu bearbeitendes Werkstück 18 aus einer Palette aufzunehmen, es zum Spannfutter 17 zu transportieren, dort zunächst das vorher bearbeitete Werkstück 18a zu entnehmen und das nächste zu bearbeitende Werkstück 18 einzusetzen. Das entnommene fertig bearbeitete Werkstück 18a kann dann in einer weiteren Palette abgelegt werden. Somit kann der Roboterarm 31 einen automatischen Werkstückwechsel ausführen. Bei dem automatischen Werkstückwechsel wird das einzusetzende Werkstück 18 entlang der Spannfutterachse S positioniert oder das eingespannte bearbeitete Werkstück 18a ergriffen. Die Relativbewegung zwischen Spannfutter 17 und dem Werkstück 18, 18a beim Einsetzen bzw. Entnehmen erfolgt beispielsgemäß nur durch das Spannfutter 17, während die Greifeinrichtung 32 des Roboterarms 31 das Werkstück 18, 18a ohne aktive eigene Bewegung festhält. Der Roboterarm 31 wird beispielsgemäß durch die Steuereinrichtung 30 gesteuert. Die Steuereinrichtung 30 kann somit eine übergeordnete Steuerung für die Werkzeugmaschine 16 und den Roboterarm 31 sein. Die Steuereinrichtung 30 kann als Hardware und/oder Software in die Steuerung des Roboterarms 31 und/oder der Werkzeugmaschine 16 integriert werden.

Die Anordnung 15 weist außerdem eine Messvorrichtung 36 auf. Die Messvorrichtung 36 hat eine Halteeinrichtung 37, mittels der die Messvorrichtung 36 am Spannfutter 17 angebracht werden kann. In angebrachtem Zustand der Halteeinrichtung 37 am Spannfutter 17 rotiert die Messvorrichtung 36 gemeinsam mit dem Spannfutter 17 um die Spannfutterachse S, wenn die erste Drehachse 21 angetrieben wird. Die Halteeinrichtung 37 hat beispielsgemäß einen Ring 38, der einen Abschnitt des Spannfutters 17 umschließt und durch eine lösbare Verbindung, insbesondere eine Schraubverbindung, am Spannfutter 17 befestigt werden kann. Vom Ring 38 ragt ein Ausleger 39 der Halteeinrichtung 37 weg, der einen Abschnitt 40 aufweist, der sich im Wesentlichen parallel zur Spannfutterachse S erstreckt, wenn die Halteeinrichtung 37 am Spannfutter 17 befestigt ist.

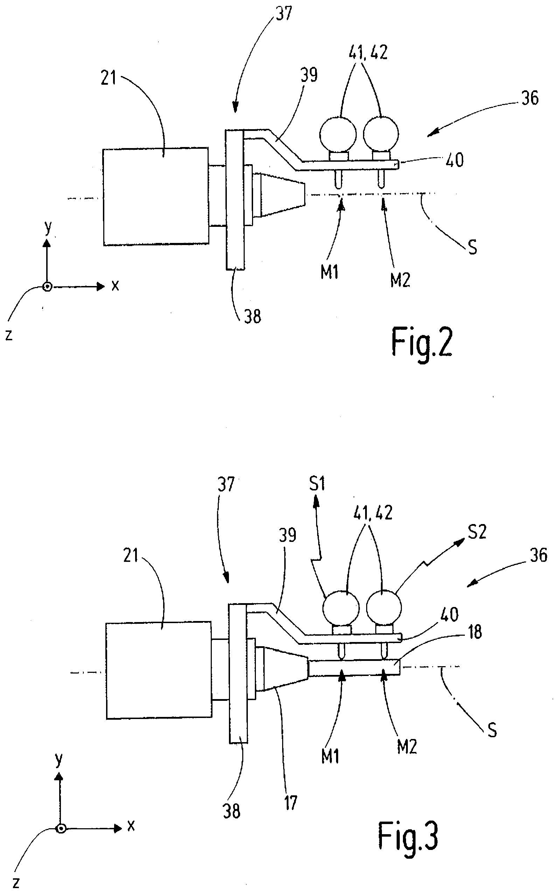

An dem Ausleger 39 und beispielsgemäß dem Abschnitt 40 der Halteeinrichtung 37 sind zwei Sensoreinheiten 41 angeordnet. Jede Sensoreinheit 41 ist dazu eingerichtet, an einer zugeordneten Messstelle M1, M2 (Figur 2) jeweils ein Messsignal zu erfassen, das den Abstand einer der Sensoreinheit 41 zugewandten Werkstückoberfläche von der Spannfutterachse S beschreibt. Beim Ausführungsbeispiel sind die Sensoreinheiten 41 als taktil messende Sensoreinheiten ausgebildet und beispielsgemäß durch jeweils eine Messuhr 42 gebildet. Der Taststift bzw. Tastkörper jeder Messuhr 42 liegt beim Messen eines Werkstücks 18 an dessen Werkstückaußenfläche an und liefert einen entsprechenden Messwert. Jede Sensoreinheit 41 ist mit der Steuereinrichtung 30 kommunikationsverbunden. Abhängig vom an den zugeordneten Messstelle M1, M2 erfassten Messwert erzeugt jede Sensoreinheit 41 ein Messsignal S1 bzw. S2, das an die Steuereinrichtung 30 übermittelt wird (Fig. 1). Beim Ausführungsbeispiel sind die Sensoreinheiten 41 drahtlos mit der Steuereinrichtung 30 kommunikationsverbunden. Die Kommunikationsverbindung kann alternativ abschnittsweise oder vollständig drahtgebunden sein.

Wie es in Figur 1 weiter schematisch veranschaulicht ist, weist die Anordnung 15 und vorzugsweise die Werkzeugmaschine 16 eine Bedienerschnittstelle 45 auf. Über die Bedienerschnittstelle 45 kann ein Bediener Informationen eingeben bzw. die Steuereinrichtung 30 kann Informationen für den Bediener ausgeben. Die Bedienerschnittstelle 45 kann herkömmliche bekannte Mittel aufweisen, wie beispielsweise einen Monitor, eine Tastatur, einen berührungsempfindlichen Bildschirm, ein berührungsempfindliches Feld, eine Computermaus, usw.

Mittels der Messvorrichtung 36 wird der Roboterarm 31 gegenüber dem Spannfutter 17 justiert, wenn sich das Spannfutter 17 in einer Werkstückwechselposition befindet. In dieser Werkstückwechselposition wird die für das Einsetzen eines neuen zu bearbeitenden Werkstücks 18 eingerichtete bzw. verwendete Greifeinrichtung 32 derart in Bezug auf die Spannfutterachse S positioniert bzw. justiert, dass das zu bearbeitende Werkstück 18 kollisionsfrei in das Spannfutter 17 eingesetzt werden kann. Diese Justage des Roboterarms 31 wird mit dem nachfolgend beschriebenen Verfahren ausgeführt, das im Wesentlichen, wie beansprucht, automatisiert durch die Steuereinrichtung 30 ausgeführt wird.

Wie es in Figur 2 veranschaulicht ist, wird zunächst die Messvorrichtung 36 am Spannfutter 17 angebracht. Die erste Messstelle M1 und die zweite Messstelle M2 der beiden Sensoreinheiten 41 sind entlang der Spannfutterachse S mit Abstand zueinander angeordnet. Die beiden Sensoreinheiten 41 bzw. die Messuhren 42 messen rechtwinklig bzw. radial zur Spannfutterachse S. Zur Vorbereitung des Justageverfahrens des Roboterarms 31 werden die Sensoreinheiten 41 eingestellt bzw. kalibriert, indem ein Werkstück 18 in das Spannfutter 17 eingespannt wird, das somit eine ideale Ausrichtung gegenüber der Spannfutterachse S aufweist. Die Sensoreinheiten 41 bzw. Messuhren 42 werden jeweils auf einen Referenzwert, beispielsweise Null, eingestellt. Der Messwert an der ersten Messstelle M1 wird durch das erste Messsignal S1 und der Messwert an der zweiten Messstelle M2 wird durch das zweite Messsignal S2 beschrieben, wobei die Messsignale S1, S2 an die Steuereinrichtung 30 übertragen werden, die die Messwerte auch über die Bedienerschnittstelle 45 ausgeben kann. Dieses Kalibrieren bzw. Initialisieren der Messvorrichtung 36 ist in Figur 3 veranschaulicht. Optional kann das Spannfutter 17 mit der Messvorrichtung 36 in einer oder mehreren Drehstellungen um die Spannfutterachse S angeordnet werden, um zu prüfen, ob der kalibrierte Referenzwert der Sensoreinheiten 41 auch in verschiedenen Drehstellungen jeweils aufrecht erhalten bleibt - zumindest bis auf eine zulässige Abweichung.

Nach dem Kalibrieren der Messvorrichtung 36 wird das Werkstück 18 aus dem Spannfutter 17 entnommen und das nachfolgende Verfahren wird automatisiert mit Hilfe der Steuereinrichtung 30 ausgeführt.

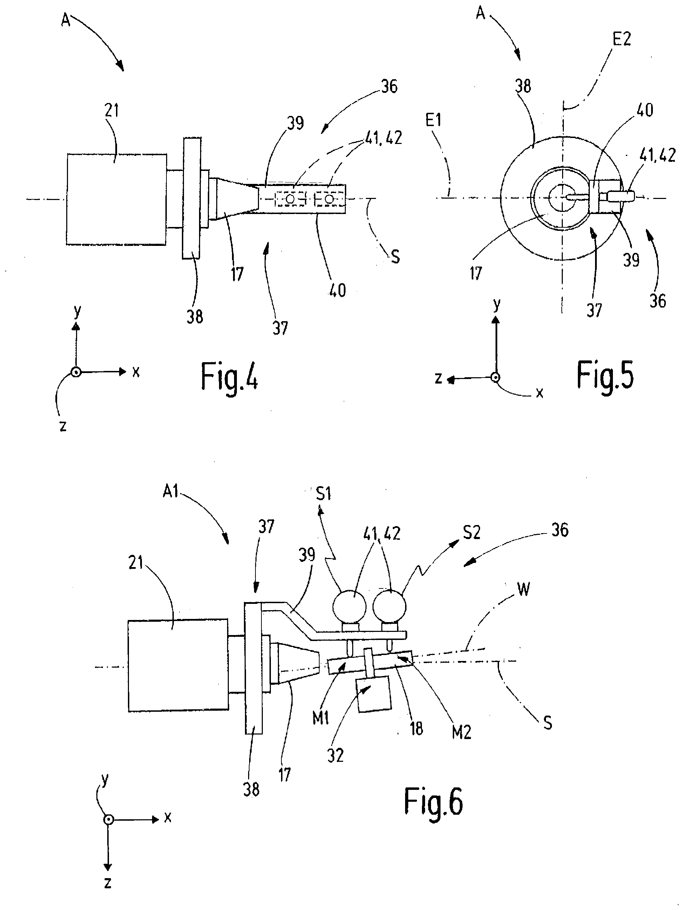

Zunächst wird das Spannfutter 17 mit der Messvorrichtung 36 in eine erste Drehstellung A bewegt, die in den Figuren 4-8 veranschaulicht ist. In der ersten Drehstellung A messen die Sensoreinheiten 41 in einer ersten Ebene E1 radial zur Spannfutterachse S, die beispielsgemäß in etwa horizontal ausgerichtet ist.

In dieser ersten Drehstellung A des Spannfutters 17 und der Messvorrichtung 36 um die Spannfutterachse S wird dann mittels des Roboterarms 31 ein durch die Greifeinrichtung 32 gehaltenes Werkstück 18 im Bereich der Messstellen M1, M2 positioniert und beispielsgemäß mit den Tastkörpern oder Taststiften der Messuhren 42 in Kontakt gebracht. Ziel der Positionierung des Werkstücks 18 ist es, eine Werkstückachse W, die bei dem kreiszylindrischen Werkstück der Längsachse entspricht, möglichst exakt entlang der Spannfutterachse S anzuordnen, so dass ein vorgegebener Toleranzbereich erreicht wird.

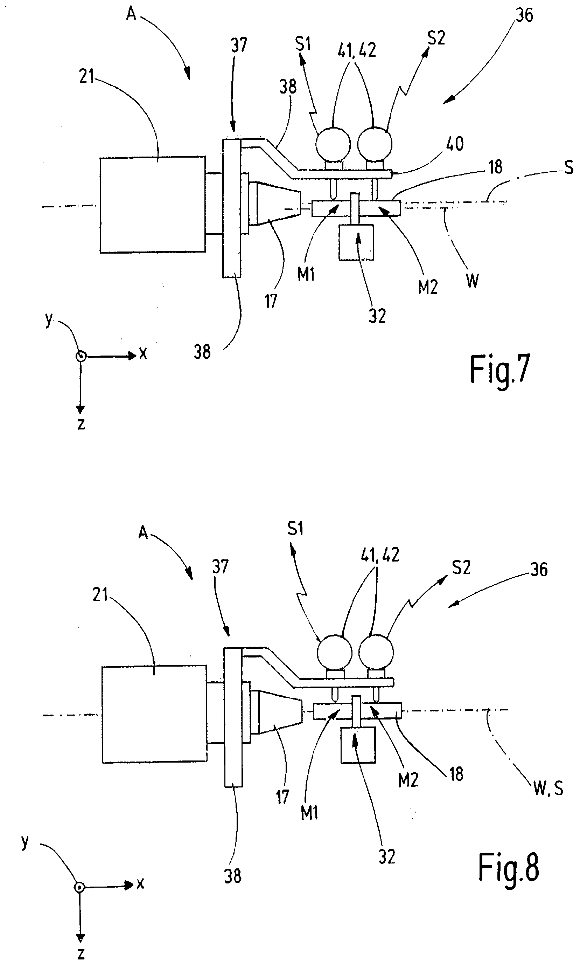

Wie es in Figur 6 veranschaulicht ist, übertragen die beiden Sensoreinheiten 41 ihr jeweiliges Messsignal S1, S2 an die Steuereinrichtung 30. Die Steuereinrichtung 30 wertet die Messsignale S1, S2 aus und steuert den Roboterarm 31 mit der Greifeinrichtung 32 an, um die gewünschte Positionierung des Werkstücks 18 zu erreichen. Zunächst wird die Greifeinrichtung 32 und mithin das Werkstück 18 und die Werkstücksachse W derart ausgerichtet, dass die Werkstücksachse W innerhalb des zulässigen Toleranzbereichs parallel zur Spannfutterachse S ausgerichtet ist (Fig. 7). Eine ausreichende Parallelität zwischen der Werkstücksachse W und der Spannfutterachse S ist erreicht, wenn die beiden Sensoreinheiten 41 im Wesentlichen denselben Messwert erfassen, da das Werkstück 18 beispielsgemäß kreiszylindrisch ist. Die Messwerte zwischen den beiden Sensoreinheiten 41 dürfen nur im zulässigen Toleranzbereich voneinander abweichen.

Im Anschluss an das parallele Ausrichten der Werkstücksachse W zur Spannfutterachse S wird das Werkstück 18 rechtwinklig zur Spannfutterachse S bewegt, bis die Werkstücksachse W möglichst mit der Spannfutterachse S zusammenfällt, wobei es auch hier ausreicht, wenn ein zulässiger Toleranzbereich erreicht wird. Wenn das von der Greifeinrichtung 32 gehaltene Werkstück 18 dieselben Abmessungen und insbesondere denselben Durchmesser aufweist, wie das Werkstück 18, das zum Kalibrieren der Messvorrichtung 36 verwendet wurde (Fig. 3), dann entsprechen die Messwerte an den beiden Messstellen M1, M2 im Idealfall den kalibrierten Referenzwerten. Weicht der Werkstückdurchmesser des von der Greifeinrichtung 32 gehaltenen Werkstücks 18 von dem Durchmesser des Werkstücks 18 ab, das zum Kalibrieren verwendet wurde, kann der Steuereinrichtung 30 der Durchmesser des aktuell verwendeten Werkstücks 18 vorgegeben werden, so dass der Messwert berechnet werden kann, den die Sensoreinheiten 41 erfassen müssen, wenn die Werkstücksachse W entlang der Spannfutterachse S positioniert ist (Fig. 8) .

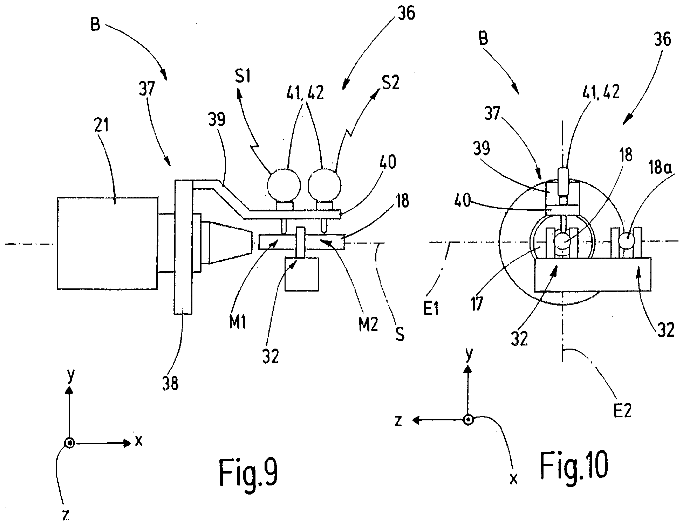

Nachdem die Positionierung des Werkstücks 18 in der ersten Drehstellung A mit ausreichender Genauigkeit erreicht wurde, veranlasst die Steuereinrichtung 30 das Drehen des Spannfutters 17 mit der Messvorrichtung 36 um die Spannfutterachse S in eine zweite Drehstellung B, die in den Figuren 9 und 10 veranschaulicht ist. Das Werkstück 18, das durch die Greifeinrichtung 32 des Roboterarms 31 gehalten wird, bleibt dabei unverändert in der Position, die in der ersten Drehstellung A vorher erreicht wurde.

Wie es in den Figuren 9 und 10 zu erkennen ist, sind die erste Drehstellung A und die zweite Drehstellung B in etwa um 90° relativ zueinander versetzt. In der zweiten Drehstellung B messen die Sensoreinheiten 41 in einer zweiten Ebene E2, die radial zur Spannfutterachse S ausgerichtet ist und im Wesentlichen rechtwinklig zur ersten Ebene E1 ausgerichtet ist. Die zweite Ebene E2 kann beispielsweise eine Vertikalebene sein.

In der zweiten Drehstellung B werden die durch die Sensorsignale S1, S2 beschriebenen Messwerte der Sensoreinheiten 41 an der ersten Messstelle M1 und der zweiten Messstelle M2 durch die Steuereinrichtung 30 ausgewertet. Ist das Werkstück 18 nicht innerhalb des vorgegebenen Toleranzbereiches mit Bezug zur Spannfutterachse S positioniert und hat beispielsweise einen zu großen Versatz oder eine zu große Neigung, werden die in den Figuren 6-8 gezeigten und mit Bezug auf die erste Drehstellung A erläuterten Bewegungen der Greifeinrichtung 32 durchgeführt, bis die Messwerte in der zweiten Drehstellung B innerhalb des vorgegebenen Toleranzbereichs liegen.

Wurde die Position des Werkstücks 18 in der zweiten Drehstellung B nochmals verändert, veranlasst die Steuereinrichtung 30 das Bewegen der Messvorrichtung 36 zurück in die erste Drehstellung A und die Messwerte werden in der ersten Drehstellung A erneut ausgewertet. Auch hier wird gegebenenfalls das Werkstück 18 nochmals bewegt und positioniert, sollte dies erforderlich sein, um den vorgegebenen Toleranzbereich zu erreichen.

Das Positionieren des Werkstücks 18, wenn sich die Messvorrichtung 36 in der ersten Drehstellung A oder der zweiten Drehstellung B befindet, wird solange fortgesetzt, bis nach dem Bewegen der Messvorrichtung 36 in eine betreffende Drehstellung A oder B festgestellt wird, dass keine Bewegung des Werkstücks 18 mittels des Roboterarms 31 erforderlich ist, um den vorgegebenen Toleranzbereich zu erreichen. Dann ist das Werkstück 18 in beiden Drehstellungen A, B der Messvorrichtung 36 ausreichend genau positioniert, so dass die Werkstücksachse W ausreichend genau entlang der Spannfutterachse S angeordnet ist. Das Justageverfahren des Roboterarms 31 ist dann abgeschlossen.

Weist der Roboterarm 31 zwei Greifeinrichtungen 32 an seinem freien Ende auf, wird beispielsgemäß in beiden Greifeinrichtungen 32 jeweils ein Werkstück 18 aufgenommen, wenn die zum Einsetzen des zu bearbeitenden Werkstücks 18 verwendete Greifeinrichtung 32 wie vorstehend beschrieben entlang der Spannfutterachse S justiert wird, wenn sich das Spannfutter 17 in der Werkstückwechselposition befindet. Dadurch wird vermieden, dass Abweichungen aufgrund unterschiedlicher Lasten bzw. Gewichtskräfte auftreten. Denn zunächst wird mit der zweiten Greifeinheit ein fertig bearbeitetes Werkstück 18a entnommen und erst anschließend das zu bearbeitende Werkstück 18 in das Spannfutter 17 eingesetzt, so dass während des Einsetzens eine entsprechend höhere Last bzw. Gewichtskraft auf das freie Ende des Roboterarms 31 einwirkt, die somit automatisch bei der Justage berücksichtigt wird.

Weichen die Gewichte der Werkstücke voneinander ab, muss für einen anderen Werkstücktyp mit höherem oder geringerem Gewicht das Justageverfahren entweder erneut durchgeführt werden oder die Steuereinrichtung 30 berechnet abhängig von der Gewichtsdifferenz der Werkstücke Korrekturwerte, so dass die Position für das Einsetzen des Werkstücks in das Spannfutter 17 mit ausreichender Genauigkeit aufrecht erhalten bleibt, auch für unterschiedliche Werkstücktypen mit unterschiedlichen Gewichten.

Da die Sensoreinheiten 41 mit der Steuereinrichtung 30 kommunikationsverbunden sind und entsprechende Messsignale S1, S2 übertragen, kann das Justageverfahren automatisiert durchgeführt werden. Es ist auch möglich, im Rahmen der beanspruchten Erfindung einzelne Verfahrensschritte im Rahmen des Verfahrens nach Anspruch durch einen Bediener manuell auszuführen, indem über die Bedienerschnittstelle 45 oder direkt die Sensoreinheiten 41 angezeigt wird, wenn die Positionierung des Werkstücks 18 in der ersten Drehstellung A oder der zweiten Drehstellung B der Messvorrichtung 36 eine ausreichende Genauigkeit erreicht hat. Das Positionieren des Werkstücks 18 mittels des Roboterarms 31 kann im Rahmen des beanspruchten Verfahrens durch entsprechende Bedieneingaben korrigiert werden.

Die Erfindung betrifft eine Anordnung 15 aufweisend eine Werkzeugmaschine 16 mit einem Spannfutter 17, einer Messvorrichtung 36, einem Roboterarm 31 sowie einer Steuereinrichtung 30. Das Spannfutter 17 ist um eine Spannfutterachse S drehbar. Der Roboterarm 31 trägt an seinem freien Ende eine Greifeinrichtung 32 zur Aufnahme eines Werkstücks 18. Die Messvorrichtung 36 hat zwei Sensoreinheiten 41. Die Messvorrichtung 36 ist dazu eingerichtet, am Spannfutter 17 angebracht zu werden, so dass sie sich gemeinsam mit dem Spannfutter 17 um die Spannfutterachse S drehen kann. Die Sensoreinheiten 41 sind im angebrachten Zustand unterschiedlichen Messstellen M1, M2 entlang der Spannfutterachse S angeordnet und können einen Abstand einer an der Messstelle M1 bzw. M2 angeordneten Werkstückaußenfläche des Werkstücks 18 von der Spannfutterachse S messen und diesen Abstand beschreibende Messsignale S1 bzw. S2 erzeugen und die Messsignale S1, S2 an die Steuereinrichtung 30 übermitteln. Mittels der Steuereinrichtung 30 kann ein automatisiertes Justageverfahren ausgeführt werden. Zunächst wird der Roboterarm 31 zur Aufnahme eines Werkstücks 18 angesteuert und anschließend wird das Werkstück 18 im Bereich der Messstellen M1, M2 positioniert. Das Positionieren erfolgt durch Ansteuern des Roboterarms 31 auf Basis der Messsignale S1, S2, bis die Abweichung in der Neigung und dem Versatz zwischen einer Werkstücksachse W und der Spannfutterachse S innerhalb eines vorgegebenen Toleranzbereichs liegt. Dieser Vorgang wird zumindest in zwei unterschiedlichen Drehstellungen A, B durchgeführt und gegebenenfalls iterativ wiederholt.

### Bezugszeichenliste:

- 15: Anordnung
- 16: Werkzeugmaschine
- 17: Spannfutter
- 18: Werkstück
- 18a: fertig bearbeitetes Werkstück
- 19: Bearbeitungswerkzeug
- 20: Maschinenachsanordnung
- 21: erste Drehachse
- 22: zweite Drehachse
- 23: erste Linearachse
- 24: Maschinenbett
- 25: zweite Linearachse
- 26: dritte Linearachse

- 30: Steuereinrichtung
- 31: Roboterarm
- 32: Greifeinrichtung

- 36: Messvorrichtung
- 37: Halteeinrichtung
- 38: Ring
- 39: Ausleger
- 40: Abschnitt des Auslegers
- 41: Sensoreinheit
- 42: Messuhr

- 45: Bedienerschnittstelle

- A: erste Drehstellung
- B: zweite Drehstellung
- E1: erste Ebene
- E2: zweite Ebene
- M1: erste Messstelle
- M2: zweite Messstelle
- R: Rotationsachse
- S: Spannfutterachse
- S1: Messsignal
- S2: Messsignal
- W: Werkstückachse

## Patentansprüche

1. Anordnung (15) aufweisend eine Werkzeugmaschine (16) mit einem um eine Spannfutterachse (S) drehbaren Spannfutter (17), eine Messvorrichtung (36) mit zwei Sensoreinheiten (41), einen Roboterarm (31) mit einer Greifeinrichtung (32) und eine Steuereinrichtung (30),
wobei die Messvorrichtung (36) dazu eingerichtet ist, am Spannfutter (17) angebracht zu werden, so dass die beiden Sensoreinheiten (41) unterschiedlichen Messstellen (M1, M2) entlang der Spannfutterachse (S) des Spannfutters (17) zugeordnet sind, wobei jede Sensoreinheit (41) dazu eingerichtet ist einen Abstand einer Werkstückaußenfläche eines Werkstücks (18) von der Spannfutterachse (S) zu messen und ein diesen Abstand beschreibendes Messsignal (S1, S2) an die Steuereinrichtung (30) zu übermitteln,
und wobei die Steuereinrichtung (30) dazu eingerichtet ist, die folgenden Schritte auszuführen:
a) Ansteuern des Roboterarms (31) zur Aufnahme des Werkstücks (18),
b) Ansteuern des Roboterarms (31) zum Positionieren des Werkstücks (18) im Bereich der Messstellen (M1, M2) der Sensoreinheiten (41) neben dem Spannfutter (17),
c) Ansteuern des Roboterarms (31) zum Positionieren des Werkstücks (18) auf Basis der Messsignale (S1, S2) derart, dass die Abweichung zwischen einer Werkstückachse (W) des Werkstücks (18) und der Spannfutterachse (S) innerhalb eines vorgegebenen Toleranzbereichs liegt, wobei sich das Spannfutter (17) und die daran angeordneten Messvorrichtung (36) in einer ersten Drehstellung (A) um die Spannfutterachse (S) befinden,
d) Ansteuern der Werkzeugmaschine (16) zum Drehen des Spannfutters (17) und der daran angeordneten Messvorrichtung (36) um die Spannfutterachse (S) in eine von der ersten Drehstellung (A) abweichende zweite Drehstellung (B), und
e) Prüfen der Position des Werkstücks (18) auf Basis der Messsignale (S1, S2), ob die Abweichung zwischen der Werkstückachse (W) und Spannfutterachse (S) innerhalb eines vorgegebenen Toleranzbereichs liegt und falls nicht Ansteuern des Roboterarms (31) zum Positionieren des Werkstücks (18) derart, dass die Abweichung zwischen der Werkstückachse (W) und der Spannfutterachse (S) innerhalb eines vorgegebenen Toleranzbereichs liegt, wobei sich das Spannfutter (17) und die daran angeordneten Messvorrichtung (36) in der zweiten Drehstellung (B) um die Spannfutterachse (S) befinden.

2. Anordnung nach Anspruch 1,
**dadurch gekennzeichnet, dass** die Steuereinrichtung (30) dazu eingerichtet ist, nach dem Schritt e) die folgenden Schritte auszuführen:
f) Ansteuern der Werkzeugmaschine (16) zum Drehen des Spannfutters (17) und der daran angeordneten Messvorrichtung (36) um die Spannfutterachse (S) in die erste Drehstellung (A) und
g) Prüfen der Position des Werkstücks (18) auf Basis der Messsignale (S1, S2) ob die Abweichung zwischen der Werkstückachse (W) und Spannfutterachse (S) innerhalb des vorgegebenen Toleranzbereichs liegt und falls nicht Ansteuern des Roboterarms (31) zum Positionieren des Werkstücks (18) derart, dass die Abweichung zwischen der Werkstückachse (W) und der Spannfutterachse (S) innerhalb eines vorgegebenen Toleranzbereichs liegt, wobei sich das Spannfutter (17) und die daran angeordneten Messvorrichtung (36) in der ersten Drehstellung (A) um die Spannfutterachse (S) befinden.

3. Anordnung nach Anspruch 2,
**dadurch gekennzeichnet, dass** die Steuereinrichtung (30) dazu eingerichtet ist, zumindest einen der Schritte d) bis g) zu wiederholen, bis die Position des Werkstücks (18) gegenüber der Spannfutterachse (S) ausreichend genau ist, so dass die Abweichung zwischen der Werkstückachse (W) und Spannfutterachse (S) sowohl in der ersten Drehstellung (A) als auch in der zweiten Drehstellung (B) innerhalb des vorgegebenen Toleranzbereichs liegt.

4. Anordnung nach einem der vorhergehenden Ansprüche,
**dadurch gekennzeichnet, dass** die Steuereinrichtung (30) dazu eingerichtet ist, den Roboterarm (31) beim Positionieren des Werkstücks (18) in den Schritten c), e) und g) derart anzusteuern, dass zunächst die Werkstückachse (W) innerhalb des vorgegebenen Toleranzbereichs parallel zur Spannfutterachse (S) ausgerichtet wird und anschließend das Werkstück (18) rechtwinkelig zur Spannfutterachse (S) bewegt wird, bis der Abstand zwischen der Werkstückachse (W) und der Spannfutterachse (S) an beiden Messstellen (M1, M2) innerhalb des Toleranzbereichs liegt.

5. Anordnung nach einem der vorhergehenden Ansprüche,
**dadurch gekennzeichnet, dass** die Steuereinrichtung (30) dazu eingerichtet ist, den Roboterarm (31) zum Positionieren des Werkstücks (18) abhängig von einem Werkstückdurchmesser und/oder von einer Greifposition der Greifeinrichtung (32) am Werkstück (18) anzusteuern.

6. Anordnung nach einem der vorhergehenden Ansprüche,
**dadurch gekennzeichnet, dass** die Sensoreinheiten (41) als taktil arbeitende Sensoreinheiten (41) ausgeführt sind.

7. Anordnung nach Anspruch 6,
**dadurch gekennzeichnet, dass** jede Sensoreinheit (41) von einer Messuhr (42) gebildet ist.

8. Anordnung nach einem der vorhergehenden Ansprüche,
**dadurch gekennzeichnet, dass** die Sensoreinheiten (41) drahtlos mit der Steuereinrichtung (30) kommunikationsverbunden sind.

9. Anordnung nach einem der vorhergehenden Ansprüche,
**dadurch gekennzeichnet, dass** der Roboterarm (31) zwei Greifeinrichtungen (32) aufweist.

10. Anordnung nach Anspruch 9,
**dadurch gekennzeichnet, dass** der Roboterarm (31) im Schritt a) mit jeder Greifeinrichtung (32) jeweils ein Werkstück (18, 18a) aufnimmt.

11. Verfahren zur Justage eines Roboterarms (31) mit einer Greifeinrichtung (32) relativ zu einem um eine Spannfutterachse (S) drehbaren Spannfutter (17) einer Werkzeugmaschine (16) unter Verwendung einer Messvorrichtung (36) mit zwei Sensoreinheiten (41) und einer Steuereinrichtung (30), umfassend die folgenden Schritte:
- Anbringen der Messvorrichtung (36) am Spannfutter (17), so dass die beiden Sensoreinheiten (41) unterschiedlichen Messstellen (M1, M2) entlang der Spannfutterachse (S) des Spannfutters (17) zugeordnet sind,
- Aufnahme eines Werkstücks (18) mit der Greifeinrichtung (32) des Roboterarms (31),
wobei die folgenden Schritte, durch die Steuereinrichtung (30) kontrolliert, ausgeführt werden:
- Bewegen des Roboterarms (31), so dass das Werkstück (18) im Bereich der Messstellen (M1, M2) der Sensoreinheiten (41) neben dem Spannfutter (17) positioniert ist,
- Positionieren des Werkstücks (18) durch Bewegen der Greifeinrichtung (32) auf Basis von Messwerten der Sensoreinheiten (41) derart, dass die Abweichung zwischen der Werkstückachse (W) und Spannfutterachse (S) innerhalb eines vorgegebenen Toleranzbereichs liegt, wobei sich das Spannfutter (17) und die daran angeordneten Messvorrichtung (36) in einer ersten Drehstellung (A) um die Spannfutterachse (S) befinden,
- Drehen des Spannfutters (17) und der daran angeordneten Messvorrichtung (36) um die Spannfutterachse (S) in eine von der ersten Drehstellung (A) abweichende zweite Drehstellung (B), und
- Prüfen der Position des Werkstücks (18) auf Basis von Messwerten der Sensoreinheiten (41), ob die Abweichung zwischen der Werkstückachse (W) und Spannfutterachse (S) innerhalb eines vorgegebenen Toleranzbereichs liegt und falls nicht Positionieren des Werkstücks (18) derart, dass die Abweichung zwischen der Werkstückachse (W) und Spannfutterachse (S) innerhalb eines vorgegebenen Toleranzbereichs liegt, wobei sich das Spannfutter (17) und die daran angeordneten Messvorrichtung (36) in der zweiten Drehstellung (B) um die Spannfutterachse (S) befinden.

## Claims

1. Arrangement (15) comprising a machine tool (16) with a chuck (17) rotatable about a chuck axis (S), a measuring device (36) with two sensor units (41), a robot arm (31) with a gripping device (32) and a control device (30),
wherein the measuring device (36) is configured to be attached to the chuck (17) such that both sensor units (41) are assigned to different measurement locations (M1, M2) along the chuck axis (S) of the chuck (17), wherein each sensor unit (41) is configured to measure a distance of the workpiece outer surface of a workpiece (18) from the chuck axis (S) and to transmit a measurement signal (S1, S2) characterizing this distance to the control device (30),
and wherein the control device (30) is configured to carry out the following steps:
a) Control of the robot arm (31) for gripping the workpiece (18),
b) Control of the robot arm (31) for positioning the workpiece (18) in the range of the measurement locations (M1, M2) of the sensor units (41) adjacent to the chuck (17),
c) Control of the robot arm (31) for positioning the workpiece (18) based on the measurement signals (S1, S2) such that the deviation between a workpiece axis (W) of the workpiece (18) and the chuck axis (S) is within a predefined tolerance range, wherein the chuck (17) and the measuring device (36) attached thereon are in a first rotation position (A) about the chuck axis (S).
d) Control of the machine tool (16) for rotating the chuck (17) and the measuring device (36) arranged thereon about the chuck axis (S) into a second rotation position (B) different from the first rotation position (A), and
e) Checking of the position of the workpiece (18) based on the measurement signals (S1, S2) whether the deviation between the workpiece axis (W) and the chuck axis (S) is within a predefined tolerance range and if not control of the robot arm (31) for positioning the workpiece (18) such that the deviation between the workpiece axis (W) and the chuck axis (S) is within a predefined tolerance range, wherein the chuck (17) and the measuring device (36) arranged thereon are in the second rotation position (B) about the chuck axis (S).

2. Arrangement according to claim 1, **characterized in that** the control device (30) is configured to carry out the following steps after step e):
f) Control of the machine tool (16) for rotating of chuck (17) and the measuring device (36) arranged thereon about the chuck axis (S) into the first rotation position (A) and
g) Checking of the position of the workpiece (18) based on the measurement signals (S1, S2) whether the deviation between the workpiece axis (W) and the chuck axis (S) is within the predefined tolerance range and if not, control of the robot arm (31) for positioning the workpiece (18) such that the deviation between the workpiece axis (W) and the chuck axis (S) is within a predefined tolerance range, wherein the chuck (17) and the measuring device (36) arranged thereon are in the first rotation position (A) about the chuck axis (S).

3. Arrangement according to claim 2, **characterized in that** the control device (30) is configured to repeat at least the steps d) to g) until the position of the workpiece (18) relative to the chuck axis (S) is sufficiently accurate such that the deviation between the workpiece axis (W) and the chuck axis (S) is within the predefined tolerance range in the first rotation position (A) as well as in the second rotation position (B).

4. Arrangement according to any of the preceding claims, **characterized in that** the control device (30) is configured to control the robot arm (31) during positioning the workpiece (18) in the steps c), e) and g) such that first the workpiece axis (W) is orientated parallel to the chuck axis (S) within the predefined tolerance range and subsequently to move the workpiece (18) orthogonally to the chuck axis (S) until the distance between the workpiece axis (W) and the chuck axis (S) is within the tolerance range at both measurement locations (M1, M2).

5. Arrangement according to any of the preceding claims, **characterized in that** the control device (30) is configured to control the robot arm (31) for positioning the workpiece (18) depending on a workpiece diameter and/or a gripping position of the gripping device (32) at the workpiece (18).

6. Arrangement according to any of the preceding claims, **characterized in that** the sensor units (41) are configured as tactile operating sensor units (41).

7. Arrangement according to claim 6, **characterized in that** each sensor unit (41) is formed by a dial gauge (42).

8. Arrangement according to any of the preceding claims, **characterized in that** the sensor units (41) are wirelessly communicatively coupled to the control device (30).

9. Arrangement according to any of the preceding claims, **characterized in that** the robot arm (31) comprises two gripping devices (32).

10. Arrangement according to claim 9, **characterized in that**, in step a), the robot arm (31) respectively grips one workpiece (18, 18a) with each gripping device (32).

11. Method for adjusting a robot arm (31) with a gripping device (32) relative to a chuck (17) rotatable about a chuck axis (S) of a machine tool (16) by using a measuring device (36) with two sensor units (41) and a control device (30), comprising the following steps:
- Attaching of the measuring device (36) to the chuck (17) such that both sensor units (41) are assigned to different measurement locations (M1, M2) along the chuck axis (S) of the chuck (17),
- Gripping a workpiece (18) with the gripping device (32) of the robot arm (31), wherein the following steps are carried out under the control of the control device (30):
- Moving of the robot arm (31) such that the workpiece (18) is positioned in the range of the measurement locations (M1, M2) of the sensor units (41) adjacent to the chuck (17),
- Positioning the workpiece (18) by moving the gripping device (32) based on the measurement values of the sensor units (41) such that the deviation between the workpiece axis (W) and the chuck axis (S) is within a predefined tolerance range, wherein the chuck (17) and the measuring device (36) arranged thereon are in a first rotation position (A) about the chuck axis (S),
- Rotating chuck (17) and the measuring device (36) arranged thereon about the chuck axis (S) into a second rotation position (B) different from the first rotation position (A), and
- Checking of the position of the workpiece (18) based on the measurement values of the sensor units (41) whether the deviation of the workpiece axis (W) and the chuck axis (S) is within a predefined tolerance range and if not, positioning the workpiece (18) such that the deviation between the workpiece axis (W) and the chuck axis (S) is within a predefined tolerance range, wherein the chuck (17) and the measuring device (36) arranged thereon are in the second rotation position (B) about the chuck axis (S).

## Revendications

1. Dispositif (15) présentant une machine-outil (16) dotée d'un mandrin de serrage (17) pouvant être mis en rotation autour d'un axe de mandrin de serrage (S), un dispositif de mesure (36) comportant deux unités de capteurs (41), un bras de robot (31) comportant un dispositif de préhension (32), et un dispositif de commande (30),
dans lequel le dispositif de mesure (36) est conçu pour être monté sur le mandrin de serrage (17), de sorte que les deux unités de capteurs (41) sont associées à des points de mesure (M1, M2) différents le long de l'axe de mandrin de serrage (S) du mandrin de serrage (17), chaque unité de capteur (41) étant conçue pour mesurer une distance d'une face externe d'une pièce à usiner (18) par rapport à l'axe de mandrin de serrage (S) et pour transmettre au dispositif de commande (30) un signal de mesure (S1, S2) décrivant cette distance,
et dans lequel le dispositif de commande (30) est conçu pour exécuter les étapes suivantes :
a) activation du bras de robot (31) en vue de saisir la pièce à usiner (18),
b) activation du bras de robot (31) en vue de positionner la pièce à usiner (18) dans la région des points de mesure (M1, M2) des unités de capteurs (41), à côté du mandrin de serrage (17),
c) activation du bras de robot (31) en vue du positionnement de la pièce à usiner (18), sur la base des signaux de mesure (S1, S2), de manière à ce que l'écart entre un axe de pièce (W) de la pièce à usiner (18) et l'axe de mandrin de serrage (S) se situe dans une plage de tolérance prédéfinie, le mandrin de serrage (17) et le dispositif de mesure (36) monté sur celui-ci se trouvant dans une première position de rotation (A) autour de l'axe de mandrin de serrage (S),
d) activation de la machine-outil (16) en vue de la rotation du mandrin de serrage (17) et du dispositif de mesure (36) monté sur celui-ci, autour de l'axe de mandrin de serrage (S), jusque dans une deuxième position de rotation (B) différente de la première position de rotation (A), et
e) vérification de la position de la pièce à usiner (18), sur la base des signaux de mesure (S1, S2), afin de savoir si l'écart entre l'axe de pièce à usiner (W) et l'axe de mandrin de serrage (S) se situe dans une plage de tolérance prédéfinie et, si tel n'est pas le cas, activation du bras de robot (31) en vue de positionner la pièce à usiner (18) de manière à ce que l'écart entre l'axe de pièce à usiner (W) et l'axe de mandrin de serrage (S) se situe dans une plage de tolérance prédéfinie, le mandrin de serrage (17) et le dispositif de mesure (36) monté sur celui-ci se trouvant dans la deuxième position de rotation (B) autour de l'axe de mandrin de serrage (S).

2. Dispositif selon la revendication 1, **caractérisé en ce que** le dispositif de commande (30) est conçu pour exécuter les étapes suivantes après l'étape e) :
f) activation de la machine-outil (16) en vue de la rotation du mandrin de serrage (17) et du dispositif de mesure (36) monté sur celui-ci, autour de l'axe de mandrin de serrage (S), jusque dans la première position de rotation (A), et
g) vérification de la position de la pièce à usiner (18), sur la base des signaux de mesure (S1, S2), afin de savoir si l'écart entre l'axe de pièce à usiner (W) et l'axe de mandrin de serrage (S) se situe dans la plage de tolérance prédéfinie et, si tel n'est pas le cas, activation du bras de robot (31) en vue de positionner la pièce à usiner (18) de manière à ce que l'écart entre l'axe de pièce à usiner (W) et l'axe de mandrin de serrage (S) se situe dans une plage de tolérance prédéfinie, le mandrin de serrage (17) et le dispositif de mesure (36) monté sur celui-ci se trouvant dans la première position de rotation (A) autour de l'axe de mandrin de serrage (S).

3. Dispositif selon la revendication 2, **caractérisé en ce que** le dispositif de commande (30) est conçu pour répéter au moins une des étapes d) à g), jusqu'à ce que la position de la pièce à usiner (18) par rapport à l'axe de mandrin de serrage (S) soit suffisamment précise pour que l'écart entre l'axe de pièce à usiner (W) et l'axe de mandrin de serrage (S) se situe dans la plage de tolérance prédéfinie, aussi bien dans la première position de rotation (A) que dans la deuxième position de rotation (B).

4. Dispositif selon l'une des revendications précédentes, **caractérisé en ce que** le dispositif de commande (30) est conçu pour activer le bras de robot (31) lors du positionnement de la pièce à usiner (18) au cours des étapes c), e) et g), de manière à ce que d'abord l'axe de pièce à usiner (W) soit orienté parallèlement à l'axe de mandrin de serrage (S), dans la plage de tolérance prédéfinie, et qu'ensuite la pièce (18) soit déplacée à angle droit par rapport à l'axe de mandrin de serrage (S), jusqu'à ce que la distance entre l'axe de pièce à usiner (W) et l'axe de mandrin de serrage (S) se situe dans la plage de tolérance prédéfinie, aux deux points de mesure (M2, M2).

5. Dispositif selon l'une des revendications précédentes, **caractérisé en ce que** le dispositif de commande (30) est conçu pour activer le bras de robot (31), pour le positionnement de la pièce (18), en fonction d'un diamètre de pièce et/ou d'une position de préhension du dispositif de préhension (32) sur la pièce (18).

6. Dispositif selon l'une des revendications précédentes, **caractérisé en ce que** les unités de capteurs (41) sont réalisées sous forme d'unités de capteurs (41) à fonctionnement tactile.

7. Dispositif selon la revendication 6, **caractérisé en ce que** chaque unité de capteur (41) est constituée d'un comparateur à cadran (42).

8. Dispositif selon l'une des revendications précédentes, **caractérisé en ce que** les unités de capteurs (41) sont reliées sur le plan de la communication par une connexion sans fil au dispositif de commande (30).

9. Dispositif selon l'une des revendications précédentes, **caractérisé en ce que** le bras de robot (31) présente deux dispositifs de préhension (32).

10. Dispositif selon la revendication 9, **caractérisé en ce qu'**à l'étape a), le bras de robot (31) saisit respectivement une pièce à usiner (18, 18a) avec chaque dispositif de préhension (32).

11. Procédé d'ajustage d'un bras de robot (31) comportant un dispositif de préhension (32), par rapport à un mandrin de serrage (17) d'une machine-outil (16) pouvant être mis en rotation autour d'un axe de mandrin de serrage (S), en utilisant un dispositif de mesure (36), doté de deux unités de capteurs (41), et un dispositif de commande (30), comprenant les étapes suivantes :
- montage du dispositif de mesure (36) sur le mandrin de serrage (17), de manière à ce que les deux unités de capteurs (41) soient associées à des points de mesure (M1, M2) différents le long de l'axe de mandrin de serrage (S) du mandrin de serrage (17),
- prise en charge d'une pièce à usiner (18) avec le dispositif de préhension (32) du bras de robot (31),
les étapes suivantes étant exécutées sous le contrôle du dispositif de commande (30) :
- déplacement du bras de robot (31), de sorte que la pièce (18) soit positionnée dans la région des points de mesure (M2, M2) des unités de capteurs (41), à côté du mandrin de serrage (17),
- positionnement de la pièce (18) par déplacement du dispositif de préhension (32), sur la base de valeurs de mesure des unités de capteurs (41), de manière à ce que l'écart entre l'axe de pièce à usiner (W) et l'axe de mandrin de serrage (S) se situe dans une plage de tolérance prédéfinie, le mandrin de serrage (17) et le dispositif de mesure (36) monté sur celui-ci se trouvent dans une première position de rotation (A) autour de l'axe de mandrin de serrage (S),
- mise en rotation du mandrin de serrage (17) et du dispositif de mesure (36) monté sur celui-ci, autour de l'axe de mandrin de serrage (S), jusque dans une deuxième position de rotation (B) différente de la première position de rotation (A), et
- vérification de la position de la pièce (18), sur la base de valeurs de mesure des unités de capteurs (41), afin de savoir si l'écart entre l'axe de pièce à usiner (W) et l'axe de mandrin de serrage (S) se situe dans une plage de tolérance prédéfinie et, si tel n'est pas le cas, positionnement de la pièce (18), de manière à ce que l'écart entre l'axe de pièce à usiner (W) et l'axe de mandrin de serrage (S) se situe dans une plage de tolérance prédéfinie, le mandrin de serrage (17) et le dispositif de mesure (36) monté sur celui-ci se trouvant dans la deuxième position de rotation (B) autour de l'axe de mandrin de serrage (S).
